(19) Europäisches Patentamt / European Patent Office / Office européen des brevets

(11) **EP 3 400 457 B1**

(12) **FASCICULE DE BREVET EUROPEEN**

(45) Date de publication et mention
de la délivrance du brevet:
**26.05.2021 Bulletin 2021/21**

(51) Int Cl.:
**G01S 7/02** *(2006.01)*    **G01S 7/28** *(2006.01)*
**G01S 7/36** *(2006.01)*

(21) Numéro de dépôt: **17700612.9**

(22) Date de dépôt: **04.01.2017**

(86) Numéro de dépôt international:
**PCT/EP2017/050157**

(87) Numéro de publication internationale:
**WO 2017/118666 (13.07.2017 Gazette 2017/28)**

(54) **PROCÉDÉ D'ÉLIMINATION D'UN SIGNAL EN PROVENANCE D'UN RADAR DE BORD**

VERFAHREN ZUM LÖSCHEN EINES SIGNALS AUS EINEM BORDRADAR

METHOD FOR DELETING A SIGNAL COMING FROM AN ON-BOARD RADAR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.01.2016 FR 1600004**

(43) Date de publication de la demande:
**14.11.2018 Bulletin 2018/46**

(73) Titulaire: **Thales**
**92400 Courbevoie (FR)**

(72) Inventeurs:
• **QUELLEC, Jean-Michel**
  **29200 Brest (FR)**
• **CORNIC, Pascal**
  **29200 Brest (FR)**
• **ARTIS, Jean-Paul**
  **29200 Brest (FR)**

(74) Mandataire: **Lavoix**
**2, place d'Estienne d'Orves**
**75441 Paris Cedex 09 (FR)**

(56) Documents cités:
**US-A1- 2008 219 322    US-A1- 2010 135 443**
**US-A1- 2010 302 091    US-B1- 6 727 840**
**US-B1- 7 843 375**

• **RAGHU K R: "Challenges of the naval electromagnetic environment for the EMC engineer", ELECTROMAGNETIC INTERFERENCE AND COMPATIBILITY, 2003. INCEMIC 2003. 8T H INTERNATIONAL CONFERENCE ON CHENNAI, INDIA DEC. 18-19, 2003, PISCATAWAY, NJ, USA,IEEE, 18 décembre 2003 (2003-12-18), pages 41-46, XP010697723, ISBN: 978-81-900652-1-4**

**Description**

La présente invention concerne un procédé d'élimination d'un signal en provenance d'un radar de bord. La présente invention se rapporte également à un détecteur de radars comprenant un dispositif associé d'élimination d'un signal en provenance d'un radar de bord.

Dans le domaine des détecteurs de radars, les émissions provenant des radars de bord situés sur la même plate-forme que le détecteur de radars ont pour effet de dégrader la réception du détecteur de radars.

De ce fait, des techniques ont été développées pour éliminer, au niveau des détecteurs de radars, les signaux provenant des radars de bord.

Une première méthode connue consiste à augmenter le découplage entre l'aérien de l'émetteur gêneur et l'aérien du détecteur de radars par masquage au moyen d'obstacles conducteurs ou d'absorbants qui empêchent le rayonnement direct entre les deux aériens considérés.

Cependant, une telle méthode est limitée en performances du fait du grand nombre possible de chemins de couplage entre les deux aériens, provenant par exemples de réflexions multiples sur la plate-forme porteuse des aériens, ou encore d'ondes de surface.

Une autre méthode, dite de blanking, selon le terme anglais consacré, consiste à interrompre la réception du détecteur pendant un intervalle de temps encadrant temporellement l'émission de l'émetteur gêneur.

Toutefois, durant l'interruption, le détecteur est inopérant, ce qui est susceptible de dégrader très fortement les performances du détecteur en termes de probabilité d'interception. Cela est d'autant plus vrai que les facteurs de forme des radars ont tendance à croître.

Il est également connu d'utiliser des techniques de filtrage analogique en insérant, à l'entrée de chaque chaîne de réception du détecteur de radars, un filtre réjecteur à la fréquence d'émission de l'émetteur gêneur.

Néanmoins, la sensibilité du détecteur est dégradée, sur les signaux utiles dans la bande de filtrage, de la valeur de l'atténuation réalisée par le filtre réjecteur.

D'autres techniques utilisant le principe du filtrage numérique sont également connues. De telles techniques consistent à réaliser un post-traitement du signal en rejetant les bandes de fréquences perturbées aux moments supposés de l'émission de l'émetteur gêneur.

Toutefois, le détecteur n'est plus apte à détecter les signaux utiles dans les bandes de fréquence rejetées, pendant les intervalles de temps concernés.

Le document US 2010/0302091 A décrit une méthode et un système pour détecter et caractériser des émetteurs.

Il existe donc un besoin pour éliminer plus efficacement les signaux émis par le ou les radars de bord situés sur la même plate-forme qu'un détecteur de radars.

A cet effet, l'invention a pour objet un procédé d'élimination selon la revendication 1.

Suivant des modes de mise en oeuvre particuliers, le procédé d'élimination comprend une ou plusieurs des caractéristiques des revendications 2 à 8, prises isolément ou suivant toutes les combinaisons techniquement possibles.

L'invention concerne aussi un détecteur de radars selon la revendication 9.

D'autres caractéristiques et avantages de l'invention apparaîtront à la lecture de la description qui suit de modes de réalisation de l'invention, donnée à titre d'exemple uniquement et en référence aux dessins qui sont :

- figure 1, une vue schématique d'un exemple d'un radar de bord, d'un détecteur de radars disposé sur une plate-forme et d'un radar extérieur disposé sur une autre plate-forme,
- figure 2, une vue schématique fonctionnelle du dispositif d'élimination de la figure 1,
- figure 3, un organigramme d'un exemple de mise en oeuvre d'un procédé d'élimination d'un signal en provenance d'un radar de bord, et
- figure 4, un graphique représentant la sortie d'un filtre adapté au signal du radar de bord.

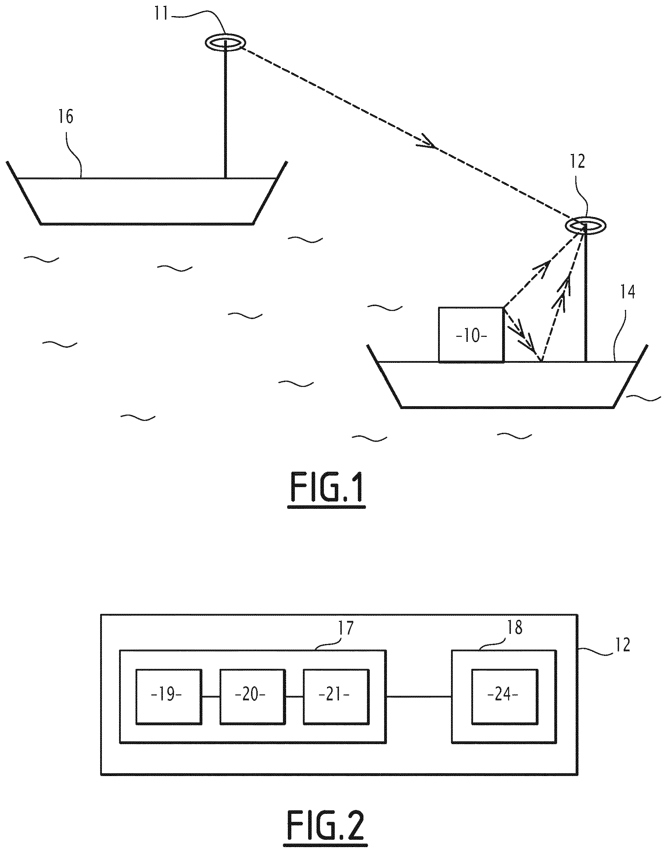

Un radar de bord 10, un radar extérieur 11 et un détecteur de radars 12 sont illustrés par la figure 1.

L'expression « radar de bord » désigne un émetteur radar situé sur une même plate-forme que le détecteur de radars 12 et dont les caractéristiques sont connues ou communiquées au dispositif d'élimination 18.

L'expression « radar extérieur » désigne un émetteur radar non situé sur la plate-forme du détecteur de radars 12.

Le radar de bord 10 et le détecteur de radars 12 appartiennent à une même plate-forme 14. La plate-forme 14 est, par exemple, un véhicule.

Dans l'exemple illustré par la figure 1, la plate-forme 14 est un navire. Dans cet exemple, le radar de bord 10 est disposé sur un pont du navire et le détecteur de radars 12 sur un mât du navire.

Le radar extérieur 11 appartient à une plate-forme 16 différente de la plate-forme 14 du radar de bord 10 et du détecteur de radars 12.

Le radar de bord 10 et le radar extérieur 11 sont chacun propre à émettre des signaux électromagnétiques, par exemple sous la forme d'impulsions électromagnétiques.

Le radar de bord 10 et le radar extérieur 11 comprennent, par exemple, des antennes.

Le radar de bord 10 est propre à émettre un premier signal émis $E_1(t)$.

Le radar extérieur 11 est propre à émettre un deuxième signal émis $E_2(t)$.

Le détecteur de radars 12 est propre à recevoir un signal radar $S(t)$.

Le détecteur de radars 12 est configuré pour couvrir l'espace entourant la plate-forme 14 sur laquelle le détecteur de radars 12 est disposé. Une telle couverture de l'espace définit différentes configurations de propagation des signaux arrivant sur le détecteur de radars 12. Les différentes configurations de propagation dépendent de l'installation du détecteur de radars 12 par rapport aux sources émettant des signaux.

Le signal reçu $S(t)$ est la somme d'un premier signal reçu $S_1(t)$ fonction du premier signal $E_1(t)$ émis par le radar de bord 10 et d'un deuxième signal reçu $S_2(t)$ fonction du deuxième signal $E_2(t)$ émis par le radar extérieur 11 et indépendant du premier signal émis $E_1(t)$.

Le premier signal reçu $S_1(t)$ est un signal parasite de puissance généralement très supérieure à la puissance du deuxième signal reçu $S_2(t)$ qui est le signal d'intérêt.

Le premier signal reçu $S_1(t)$ est représentable par une combinaison linéaire de N signaux élémentaires issus du premier signal émis $E_1(t)$, aussi appelés composantes du premier signal reçu $S_1(t)$ dans la suite de la description.

Les signaux élémentaires de la combinaison linéaire correspondent aux différents chemins de propagation d'un même signal émis par le radar de bord. Chaque chemin de propagation est propre à un ou plusieurs modes de propagation, par exemple, direct, diffracté, réfléchi, diffusé ou à une combinaison des modes précédents.

Chaque signal élémentaire est caractérisé par un coefficient d'amplitude $A_i$ et un retard $\tau_i$ par rapport au signal émis correspondant. Le coefficient d'amplitude $A_i$ et le retard $\tau_i$ de chaque signal élémentaire sont spécifiques au chemin parcouru.

Le retard $\tau_i$ de chaque signal élémentaire correspond au rapport entre la distance parcourue par le signal élémentaire et la vitesse de propagation des ondes électromagnétiques.

Le coefficient d'amplitude $A_i$ de chaque signal élémentaire dépend notamment des coefficients de réflexion et/ou d'absorption du ou des éléments se trouvant sur le chemin de propagation du signal élémentaire.

Dans l'exemple de la figure 1, les éléments réfléchissants sont, par exemple, le mât ou le pont du navire ou encore la mer.

De ce fait, le premier signal reçu $S_1(t)$ s'écrit, par exemple, sous la forme de l'expression suivante :

$$S_1(t) = \sum_{i=0}^{N-1} A_i.E_1(t - \tau_i) \qquad (1)$$

Où :

- $E_1(t)$ est le premier signal émis par le radar de bord 10,
- $S_1(t)$ est le premier signal reçu correspondant au premier signal émis $E_1(t)$ par le radar de bord 10,
- N est le nombre de chemins différents empruntés par le premier signal émis $E_1(t)$ avant d'atteindre le détecteur 12,
- $A_i$ est le coefficient d'amplitude du signal élémentaire reçu par le détecteur 12 en provenance du radar de bord 10 après avoir emprunté le chemin i, et
- $\tau_i$ est le retard du signal élémentaire reçu par le détecteur 12 en provenance du radar de bord 10 après avoir emprunté le chemin i.

Le deuxième signal reçu $S_2(t)$ est le signal utile.

Comme illustré sur la figure 2, le détecteur de radars 12 comprend au moins une voie 17 de réception d'un signal électromagnétique. Le détecteur de radars 12 comprend, en outre, pour la ou chaque voie de réception 17, un dispositif 18 d'élimination dans le signal reçu $S(t)$ du premier signal $S_1(t)$ en provenance du radar de bord 10.

Chaque voie de réception 17 comprend au moins une antenne 19, une chaîne de réception 20 et un convertisseur analogique-numérique 21.

La ou chaque antenne 19 de chaque voie de réception 17 est propre à recevoir le signal radar $S(t)$.

La chaîne de réception 20 de chaque voie de réception 17 est configurée pour mettre le signal reçu $S(t)$ à un niveau exploitable par le convertisseur analogique-numérique 21 et par le dispositif d'élimination 18. La chaîne de réception 20 comprend, par exemple, un amplificateur, un dispositif de changement de fréquence du signal reçu ou encore un dispositif de limitation de la bande de fréquence du signal reçu.

Le convertisseur analogique-numérique 21 de chaque voie de réception 17 est configuré pour convertir des signaux analogiques reçus par le détecteur de radars 12 en signaux numériques.

Le dispositif d'élimination 18 est configuré pour éliminer le premier signal reçu $S_1(t)$ du signal reçu $S(t)$ par la ou les antennes du détecteur de radars 12 de sorte à conserver uniquement le deuxième signal reçu $S_2(t)$.

Comme illustré par la figure 2, le dispositif d'élimination 18 comprend un processeur 24 comprenant une unité de traitement de données, des mémoires et un lecteur de support d'informations.

Le processeur 24 est propre à interagir avec un produit programme d'ordinateur comprenant un support lisible d'informations lisible par le processeur 24, usuellement par l'unité de traitement de données du processeur 24. Sur le support lisible d'information est mémorisé un programme d'ordinateur comprenant des instructions de programme.

Le programme d'ordinateur est chargeable sur l'unité de traitement de données du processeur 24 et est adapté pour entraîner la mise en oeuvre d'étapes d'un procédé d'élimination qui sont détaillées dans la suite de la description.

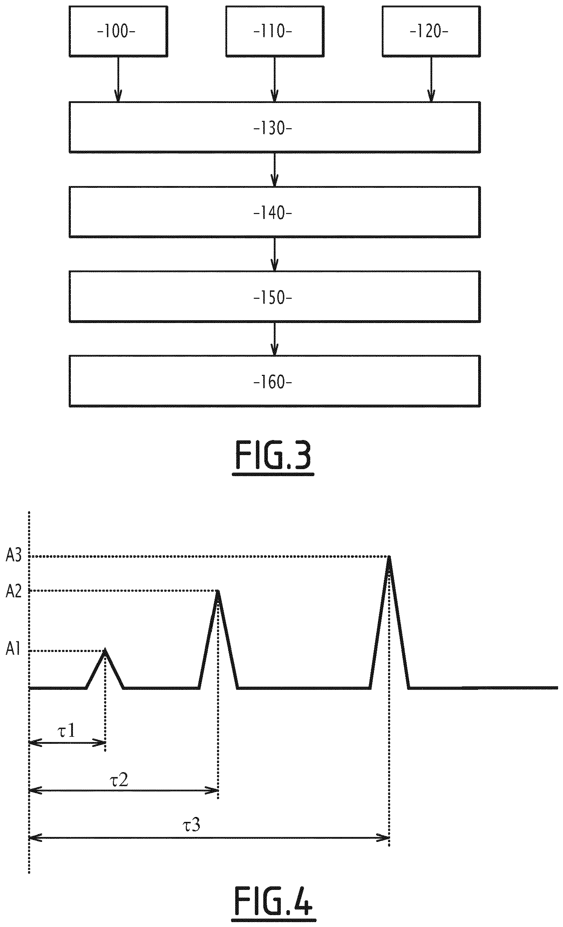

Un exemple de fonctionnement du dispositif d'élimination 18 est maintenant décrit en référence à la figure 3, qui illustre schématiquement un organigramme de mise en oeuvre d'un procédé d'élimination du signal en provenance du radar de bord 10.

Initialement, le procédé d'élimination comprend une étape 100 de fourniture d'une réplique h(t) du premier signal $E_1(t)$ émis par le radar de bord 10.

La réplique h(t) du premier signal émis $E_1(t)$ est un signal échantillonné et numérisé.

La réplique h(t) du premier signal émis $E_1(t)$ est, par exemple, fournie sous la forme d'un fichier comprenant les données du premier signal $E_1(t)$ par le radar de bord 10.

En variante, le dispositif d'élimination 18 comprend, dans une mémoire, une base de données de signaux émis par le radar de bord 10. Chaque signal de la base de données est référencé par un numéro. Dans ce cas, l'étape 100 de fourniture comprend la fourniture du numéro du premier signal $E_1(t)$ par le radar de bord 10.

Le procédé d'élimination comprend également une étape 110 de fourniture de données relatives à la réplique h(t) du premier signal émis $E_1(t)$.

En particulier, les données fournies comprennent un signal d'horloge d'échantillonnage Hech et un signal de synchronisation Synch.

Le signal d'horloge d'échantillonnage Hech est un signal donnant la fréquence d'échantillonnage de la réplique fournie h(t).

La fréquence d'échantillonnage de la réplique fournie h(t) est, par exemple, comprise entre 1 Mégahertz (MHz) et 4000 MHz.

Le signal de synchronisation Synch est un signal donnant la date de démarrage, aussi appelée origine, de la réplique h(t).

Le signal de synchronisation Synch est utilisé pour synchroniser l'origine du signal reçu S(t) avec l'origine du premier signal émis $E_1(t)$.

Les étapes de fourniture 100 et 110 sont mises en oeuvre avec une périodicité correspondant à la période de répétition des impulsions émises par le radar de bord 10. La période de répétition des impulsions désigne la durée entre les fronts avant des impulsions successives émises par un même radar.

Le procédé d'élimination comprend, également, une étape 120 de réception du signal S(t). Comme décrit précédemment, le signal reçu S(t) est la somme du premier signal reçu $S_1(t)$ et du deuxième signal reçu $S_2(t)$.

L'étape de réception 120 est mise en oeuvre par la ou chaque voie de réception 17 du détecteur de radars 12.

Le procédé d'élimination comprend une étape 130 de traitement du signal reçu S(t) pour obtenir un signal reçu traité $S_T(t)$.

L'étape de traitement 130 consiste à échantillonner le signal reçu S(t).

L'échantillonnage du signal reçu S(t) est réalisé à partir du signal d'horloge d'échantillonnage Hech fourni à la même fréquence d'échantillonnage que la réplique h(t) fournie.

L'échantillonnage est mis en oeuvre par le convertisseur analogique-numérique 21 de la ou chaque voie de réception 17.

Dans le mode de réalisation illustré sur la figure 3, le procédé d'élimination comprend une étape 140 de synchronisation du signal reçu traité $S_T(t)$ avec la réplique h(t) du signal émis fourni $E_1(t)$ pour obtenir une relation temporelle.

La relation temporelle est une relation entre l'origine du signal reçu traité $S_T(t)$ et l'origine de la réplique h(t) fournie du signal émis fourni $E_1(t)$.

En particulier, lorsque le signal reçu traité $S_T(t)$ est un signal échantillonné, la relation temporelle associe chaque échantillon du signal reçu traité $S_T(t)$, à un échantillon de la réplique h(t) fournie. La synchronisation consiste donc à numéroter les échantillons de la réplique h(t) du premier signal émis $E_1(t)$ et les échantillons du signal reçu traité $S_T(t)$ et à associer les échantillons de même numéro entre eux.

L'étape de synchronisation est mise en oeuvre par le processeur 24 du dispositif d'élimination 18 en utilisant le signal de synchronisation Synch.

En variante, la réplique h(t) fournie et le signal reçu traité $S_T(t)$ sont tous deux sous forme d'échantillons espacés du même pas temporel correspondant à la période du signal d'horloge d'échantillonnage Hech et numérotés à partir du front du signal de synchronisation Synch. Dans ce cas, l'étape de synchronisation 140 n'est pas mise en œuvre.

Le procédé d'élimination comprend une étape 150 de détermination des coefficients d'amplitude $A_i$ et des retards $\tau_i$ des signaux élémentaires du premier signal reçu $S_1(t)$ par rapport au premier signal $E_1(t)$ émis par le radar de bord 10.

Dans un mode de réalisation, l'étape de détermination 150 comprend le calcul d'un filtre adapté au signal du radar de bord 10 à partir de la réplique h(t) fournie, du signal reçu traité $S_T(t)$ et, le cas échéant, de la relation temporelle.

Le filtre adapté est une fonction, adaptée à la réplique h(t) fournie, permettant d'obtenir des extrémums pour les différents instants décalés de retards $\tau_i$ par rapport au signal émis $E_1(t)$. De tels extrémums correspondant aux différents chemins de propagation.

Le filtre adapté fait, par principe, ressortir dans le temps la corrélation entre le premier signal émis $S_1(t)$ et la réplique h(t) fournie. Les valeurs des pics de corrélation ou extrémums correspondent aux coefficients d'amplitude $A_i$ des signaux élémentaires du premier signal reçu $S_1(t)$ et leur position dans le temps aux retards $\tau_i$ desdits signaux élémentaires.

De ce fait, si le signal reçu pendant la durée de filtrage adapté est un signal issu du radar extérieur 11, la réponse en sortie du filtre adapté possède une amplitude faible, étant donné que le filtre n'est pas adapté au signal émis par le radar extérieur 11.

Le filtre adapté au radar de bord 10 est donné par la fonction suivante :

$$c(\Delta t) = \frac{\int_0^T S_T(t).[h(t-\Delta t)]^* dt}{\sqrt{\int_0^T |h(t-\Delta t)|^2 dt}} \qquad (2)$$

Où:

- $c(\Delta t)$ est une fonction de la variable $\Delta t$,
- h (t) est la réplique fournie du signal émis $E_1(t)$, exprimée en représentation complexe,
- h (t)* est le signal conjugué du signal h(t),
- $S_T(t)$ est le signal reçu traité exprimé en représentation complexe,
- T est la somme de la durée d'une impulsion représentative émise par le radar de bord 10 et du retard maximal de réception sur le détecteur de radars 12 d'une impulsion en provenance du radar de bord 10,
- $\int_0^T X.dt$ désigne l'intégrale de X sur la variable t, t variant de 0 à T,
- $|X|^2$ est le carré du module de X, et
- $\sqrt{X}$ est la racine carrée de X.

A titre d'exemple, la figure 4 représente trois pics de corrélation obtenus par la fonction du filtre adapté. Chaque pic correspond à un couple coefficient d'amplitude $A_i$ et retard $\tau_i$ d'un même chemin de propagation.

L'étape de détermination 150 comprend, en outre, une phase de comparaison de chaque coefficient d'amplitude $A_i$ à un seuil prédéterminé et d'élimination des signaux élémentaires dont le coefficient d'amplitude $A_i$ est strictement inférieur au seuil prédéterminé. De ce fait, à l'issue de l'étape de détermination 150, les coefficients d'amplitude $A_i$ déterminés sont supérieurs ou égaux au seuil prédéterminé et les retards $\tau_i$ déterminés sont les retards correspondant auxdits coefficients d'amplitude $A_i$ déterminés. Ainsi, la comparaison au seuil prédéterminé permet de valider les valeurs de coefficient d'amplitude $A_i$ en prenant en compte un niveau de rapport signal-à-bruit.

Le procédé d'élimination comprend une étape 160 d'élimination dans le signal reçu traité $S_T(t)$ du premier signal $S_1(t)$ pour ne conserver que le deuxième signal reçu $S_2(t)$.

L'étape d'élimination 160 comprend une première phase de calcul d'un signal d'annulation $S_A(t)$ à partir des coefficients amplitude $A_i$ déterminés, des retards $\tau_i$ déterminés et de la réplique h(t) fournie.

Compte tenu que le radar de bord 10 balaie l'espace au fur et à mesure que ledit détecteur de radars 12 reçoit des impulsions, les configurations de propagation au niveau de la plate-forme 14 du détecteur de radars 12 sont susceptibles d'évoluer d'une impulsion reçue à une autre. Le signal d'annulation est, par conséquent, propre à chaque impulsion.

Le signal d'annulation $S_A(t)$ s'exprime sous la forme de l'expression suivante :

$$S_A(t) = \sum_{i=0}^{N-1} A_i.h(t - \tau_i) \qquad (5)$$

Le signal d'annulation $S_A(t)$ est donc une estimation du premier signal reçu $S_1(t)$.

L'étape d'élimination 160 comprend une deuxième phase de soustraction du signal d'annulation $S_A(t)$, dans le signal reçu traité $S_T(t)$ retardé d'un retard additionnel.

Le retard additionnel correspond au moins à la durée de mise en oeuvre des étapes de détermination et de la phase de calcul de l'étape d'élimination. Le retard additionnel est, par exemple, réalisé à partir d'une fonction de mise en mémoire tampon du signal reçu traité $S_T(t)$ pendant toute la durée de l'étape de détermination 150 et de la phase de calcul de l'étape d'élimination 160.

En complément, lorsque plusieurs radars de bord 10 sont susceptibles de perturber la réception du détecteur de radars 12, le procédé d'élimination est répété pour chaque radar de bord 10.

Un tel procédé d'élimination est particulièrement adapté pour un traitement en temps réel des signaux S(t) reçus par le détecteur de radars 12.

En outre, les étapes mises en oeuvre par le dispositif d'élimination 18 sont aisément réalisables à distance du détecteur de radars 12. De ce fait, dans une variante, le dispositif d'élimination 18 est déporté par rapport au détecteur de radars 12.

De plus, un tel procédé d'élimination réduit la gêne du détecteur de radars 12 tout en permettant la détection de signaux utiles par le détecteur de radars 12 dans toute la gamme de fréquence accessible par le détecteur de radars 12 et quelle que soit la durée temporelle de la gêne.

L'utilisation d'un filtre adapté au signal du radar de bord 10 permet d'éliminer uniquement les signaux en provenance du radar de bord 10 sans affecter le signal utile.

En outre, un tel procédé d'élimination est applicable à des signaux provenant d'émetteurs de bord autres que les radars de bord.

**Revendications**

1. Procédé d'élimination dans un signal radar (S(t)) reçu par un détecteur de radars (12) appartenant à une plateforme (14), d'un premier signal ($S_1$(t)) en provenance d'au moins un radar de bord (10) appartenant à la même plate-forme (14), le procédé comprenant les étapes de :

   - fourniture d'une réplique (h(t)) du signal ($E_1$(t)) émis par le radar de bord (10),
   - réception par le détecteur de radars (12) d'un signal (S(t)), le signal reçu (S(t)) étant la somme d'un premier signal ($S_1$(t)) fonction du signal émis ($E_1$(t)) par le radar de bord (10) et d'un deuxième signal ($S_2$(t)) indépendant du signal émis ($E_1$(t)) par le radar de bord (10), le premier signal ($S_1$(t)) étant représentable par une combinaison linéaire de signaux élémentaires présentant chacun un coefficient d'amplitude ($A_i$) et un retard ($\tau_i$) par rapport au signal ($E_1$(t)) émis par le radar de bord (10),
   - traitement du signal reçu (S(t)) pour obtenir un signal reçu traité ($S_T$(t)),
   - détermination des coefficients d'amplitude ($A_i$) et des retards ($\tau_i$) des signaux élémentaires du premier signal ($S_1$(t)) par rapport au signal ($E_1$(t)) émis par le radar de bord (10), l'étape de détermination étant mise en oeuvre à partir de la réplique (h(t)) fournie et du signal reçu traité ($S_T$(t)), l'étape de détermination comprenant le calcul d'un filtre adapté au signal du radar de bord (10) à partir de la réplique (h(t)) fournie, du signal reçu traité ($S_T$(t)), le filtre adapté étant une fonction dont les extrémums sont les coefficients d'amplitude ($A_i$) des signaux élémentaires du premier signal reçu ($S_1$(t)), et
   - élimination, dans le signal reçu traité ($S_T$(t)), du premier signal ($S_1$(t)) pour obtenir le deuxième signal ($S_2$(t)), l'étape d'élimination étant mise en oeuvre à partir de la réplique (h(t)) fournie, des coefficients d'amplitude ($A_i$) déterminés et des retards ($\tau_i$) déterminés.

2. Procédé selon la revendication 1, dans lequel les retards ($\tau_i$) des signaux élémentaires du premier signal ($S_1$(t)) sont les instants des coefficients d'amplitude ($A_i$) correspondants.

3. Procédé selon la revendication 1 ou 2, dans lequel le filtre adapté au radar de bord (10) est donné par la fonction suivante :

$$c(\varDelta t) = \frac{\int_0^T S_T(t).[h(t - \varDelta t)]^* dt}{\sqrt{\int_0^T |h(t - \varDelta t)|^2 dt}}$$

Où

   • $c(\varDelta t)$ est une fonction de la variable $\Delta$t,

- h (t) est la réplique fournie du signal émis $E_1(t)$, exprimée en représentation complexe,
- h (t)* est le signal conjugué du signal h(t),
- $S_T(t)$ est le signal reçu traité exprimé en représentation complexe,
- T est la somme de la durée d'une impulsion représentative émise par le radar de bord (10) et du retard maximal de réception sur le détecteur de radars (12) d'une impulsion en provenance du radar de bord (10),
- $\int_0^T X.dt$ désigne l'intégrale de X sur la variable t, t variant de 0 à T,
- $|X|^2$ est le carré du module de X, et
- $\sqrt{X}$ est la racine carrée de X.

4. Procédé selon l'une quelconque des revendications 1 à 3, dans lequel l'étape de détermination comprend la comparaison de chaque coefficient d'amplitude $(A_i)$ déterminé à un seuil prédéterminé, les coefficients d'amplitude $(A_i)$ retenus étant supérieurs ou égaux au seuil prédéterminé.

5. Procédé selon l'une quelconque des revendications 1 à 4, dans lequel la réplique (h(t)) du signal émis fourni $(E_1(t))$ est un signal échantillonné à une fréquence d'échantillonnage, l'étape de traitement comprenant l'échantillonnage du signal reçu (S(t) à la fréquence d'échantillonnage de la réplique (h(t)) pour obtenir le signal reçu traité $(S_T(t))$.

6. Procédé selon l'une quelconque des revendications 1 à 5, dans lequel l'étape d'élimination comprend une phase de calcul d'un signal d'annulation $(S_A(t))$ à partir des coefficients d'amplitude $(A_i)$ déterminés, des retards $(\tau_i)$ déterminés et du signal émis fourni $(E_1(t))$, le signal d'annulation $(S_A(t))$ étant une estimation du premier signal $(S_1(t))$.

7. Procédé selon la revendication 6, dans lequel l'étape d'élimination comprend, en outre, une phase de soustraction du signal d'annulation $(S_A(t))$ du signal reçu traité $(S_T(t))$ retardé d'un retard additionnel, le retard additionnel correspondant au moins à la durée de mise en oeuvre de l'étape de détermination et de la phase de calcul de l'étape d'élimination.

8. Procédé selon l'une quelconque des revendications 1 à 7, dans lequel les étapes de fourniture, de détermination et d'élimination du procédé d'élimination sont mises en œuvre pour chaque radar de bord (10).

9. Détecteur de radars (12) appartenant à une plate-forme (14), le détecteur de radars (12) étant propre à mettre en oeuvre une étape de réception d'un signal (S(t)), le signal reçu (S(t)) étant la somme d'un premier signal $(S_1(t))$ fonction d'un signal émis $(E_1(t))$ par au moins un radar de bord (10) appartenant à la même plate-forme (14), et d'un deuxième signal $(S_2(t))$ indépendant du signal émis $(E_1(t))$ par le radar de bord (10), le premier signal $(S_1(t))$ étant représentable par une combinaison linéaire de signaux élémentaires présentant chacun un coefficient d'amplitude $(A_i)$ et un retard $(\tau_i)$ par rapport au signal $(E_1(t))$ émis par le radar de bord (10), le détecteur de radars (12) comprenant, en outre, un dispositif (18) d'élimination dans le signal radar (S(t)) reçu par le détecteur de radars (12)), du premier signal $(S_1(t))$, le dispositif (18) comprenant un processeur (24) propre à mettre en œuvre les étapes suivantes :

- traitement du signal reçu (S(t)) pour obtenir un signal reçu traité $(S_T(t))$,
- détermination des coefficients d'amplitude $(A_i)$ et des retards $(\tau_i)$ des signaux élémentaires du premier signal $(S_1(t))$ par rapport au signal $(E_1(t))$ émis par le radar de bord (10), l'étape de détermination étant mise en œuvre à partir de la réplique (h(t)) fournie, du signal reçu traité $(S_T(t))$, l'étape de détermination comprenant le calcul d'un filtre adapté au signal du radar de bord (10) à partir de la réplique (h(t)) fournie, du signal reçu traité $(S_T(t))$, le filtre adapté étant une fonction dont les extrémums sont les coefficients d'amplitude $(A_i)$ des signaux élémentaires du premier signal reçu $(S_1(t))$, et
- élimination, dans le signal reçu traité $(S_T(t))$, du premier signal $(S_1(t))$ pour obtenir le deuxième signal $(S_2(t))$, l'étape d'élimination étant mise en œuvre à partir de la réplique (h(t)) fournie, des coefficients d'amplitude $(A_i)$ déterminés et des retards $(\tau_i)$ déterminés.

**Patentansprüche**

1. Verfahren zum Eliminieren in einem Radarsignal (S(t)), welches mittels eines Radardetektors (12) empfangen wird, welcher zu einer Plattform (14) gehört, eines ersten Signals $(S_1(t))$ aus zumindest einem Bordradar (10), welches zur selben Plattform (14) gehört, wobei das Verfahren die folgenden Schritte aufweist:

- Bereitstellen einer Nachbildung (h(t)) des Signals ($E_1$(t)), welches mittels des Bordradars (10) gesendet wird,
- Empfangen mittels des Radardetektors (12) eines Signals (S(t)), wobei das empfangene Signal (S(t)) die Summe eines ersten Signals ($S_1$(t)), welches abhängig vom mittels des Bordradars (10) gesendeten Signal ($E_1$(t)) ist, und eines zweiten Signals ($S_2$(t)), welches unabhängig vom mittels des Bordradars (10) gesendeten Signal ($E_1$(t)) ist, wobei das erste Signal ($S_1$(t)) mittels einer Linearkombination von Elementarsignalen darstellbar ist, welche jeweils einen Amplitude-Koeffizienten ($A_i$) und eine Verzögerung ($\tau_i$) bezüglich des mittels des Bordradars (10) gesendeten Signals ($E_1$(t)) haben,
- Verarbeiten des empfangenen Signals (S(t)), um ein verarbeitetes empfangenes Signal ($S_T$(t)) zu erlangen,
- Ermitteln der Amplitude-Koeffizienten ($A_i$) und der Verzögerungen ($\tau_i$) der Elementarsignale des ersten Signals ($S_1$(t)) bezüglich des mittels des Bordradars (10) gesendeten Signals ($E_1$(t)), wobei der Schritt des Ermittelns ausgehend von der bereitgestellten Nachbildung (h(t)) und dem verarbeiteten empfangenen Signal ($S_T$(t)) durchgeführt wird, wobei der Schritt des Ermittelns aufweist das Berechnen eines Filters, welches an das Signal des Bordradars (10) angepasst ist, ausgehend von der bereitgestellten Nachbildung (h(t)), vom verarbeiteten empfangenen Signal ($S_T$(t)), wobei das angepasste Filter eine Funktion ist, deren Extrema die Amplitude-Koeffizienten ($A_i$) der Elementarsignale des ersten empfangenen Signals ($S_1$(t)) sind, und
- Eliminieren, im verarbeiteten empfangenen Signal ($S_T$(t)), des ersten Signals ($S_1$(t)), um das zweite Signal ($S_2$(t)) zu erlangen, wobei der Schritt des Eliminierens ausgehend von der bereitgestellten Nachbildung (h(t)), von den ermittelten Amplitude-Koeffizienten ($A_i$) und von den ermittelten Verzögerungen ($\tau_i$) durchgeführt wird.

2. Verfahren gemäß Anspruch 1, wobei die Verzögerungen ($\tau_i$) der Elementarsignale des ersten Signals ($S_1$(t)) die Zeitpunkte der korrespondierenden Amplitude-Koeffizienten ($A_i$) sind.

3. Verfahren gemäß Anspruch 1 oder 2, wobei das Filter, welches an das Bordradar (10) angepasst ist, durch die folgende Funktion gegeben ist:

$$c(\Delta t) = \frac{\int_0^T S_T(t).[h(t - \Delta t)]^* dt}{\sqrt{\int_0^T |h(t - \Delta t)|^2 dt}}$$

wobei:

• $c(\Delta t)$ eine Funktion der Variable $\Delta t$ ist,
• h(t) die bereitgestellte Nachbildung des gesendeten Signals $E_1$(t) ist, ausgedrückt in komplexer Darstellung,
• h(t)* das konjugierte Signal des Signals h(t) ist,
• $S_T$(t) das verarbeitete empfangene Signal ist, ausgedrückt in komplexer Darstellung,
• T die Summe der Dauer eines repräsentativen mittels des Bordradars (10) gesendeten Pulses und der maximalen Verzögerung des Empfangens am Radardetektor (12) eines Pulses vom Bordradar (10) ist,
• $\int_0^T X.dt$ das Integral von X über die Variable t ist, wobei t von 0 bis T variiert,
• $|X|^2$ das Quadrat des Moduls von X ist und
• $\sqrt{X}$ die Quadratwurzel von X ist.

4. Verfahren gemäß irgendeinem der Ansprüche 1 bis 3, wobei der Schritt des Ermittelns aufweist das Vergleichen jedes ermittelten Amplitude-Koeffizienten ($A_i$) mit einem vorbestimmten Schwellwert, wobei die in Betracht gezogenen Amplitude-Koeffizienten ($A_i$) größer als oder gleich dem vorbestimmten Schwellwert sind.

5. Verfahren gemäß irgendeinem der Ansprüche 1 bis 4, wobei die Nachbildung (h(t)) des bereitgestellten gesendeten Signals ($E_1$(t)) ein mit einer Abtastfrequenz abgetastetes Signal ist, wobei der Schritt des Verarbeitens aufweist das Abtasten des empfangenen Signals (S(t)) mit der Abtastfrequenz der Nachbildung (h(t)), um das verarbeitete empfangene Signal ($S_T$(t)) zu erlangen.

6. Verfahren gemäß irgendeinem der Ansprüche 1 bis 5, wobei der Schritt des Eliminierens aufweist eine Phase des Berechnens eines Auslöschungssignals ($S_A$(t))) ausgehend von den ermittelten Amplitude-Koeffizienten ($A_i$), von den ermittelten Verzögerungen ($\tau_i$) und vom bereitgestellten gesendeten Signal ($E_1$(t)), wobei das Auslöschungssignal ($S_A$(t)) eine Abschätzung des ersten Signals ($S_1$(t)) ist.

**7.** Verfahren gemäß Anspruch 6, wobei der Schritt des Eliminierens ferner aufweist eine Phase des Subtrahierens des Auslöschungssignals ($S_A(t)$) vom verarbeiteten empfangenen Signal ($S_T(t)$), welches um eine zusätzliche Verzögerung verzögert ist, wobei die zusätzliche Verzögerung zumindest zur Dauer des Durchführens des Schritts des Ermittelns und der Phase des Berechnens des Schritts des Eliminierens korrespondiert.

**8.** Verfahren gemäß irgendeinem der Ansprüche 1 bis 7, wobei die Schritte des Bereitstellens, des Ermittelns und des Eliminierens des Verfahrens zum Eliminieren für jedes Bordradar (10) durchgeführt werden.

**9.** Radardetektor (12), welcher zu einer Plattform (14) gehört, wobei der Radardetektor (12) imstande ist, einen Schritt des Empfangens eines Signals ($S(t)$) durchzuführen, wobei das empfangene Signal ($S(t)$) die Summe eines ersten Signals ($S_1(t)$), welches abhängig von einem mittels zumindest einem zur selben Plattform (14) gehörenden Bordradar (10) gesendeten Signal ($E_1(t)$) ist, und eines zweiten Signals ($S_2(t)$), welches unabhängig vom mittels des Bordradars (10) gesendeten Signal ($E_1(t)$) ist, wobei das erste Signal ($S_1(t)$) mittels einer Linearkombination von Elementarsignalen darstellbar ist, welche jeweilig einen Amplitude-Koeffizienten ($A_i$) und eine Verzögerung ($\tau_i$) bezüglich des mittels des Bordradars (10) gesendeten Signals ($E_1(t)$) haben, wobei der Radardetektor (12) ferner aufweist eine Vorrichtung (18) zum Eliminieren im mittels des Radardetektors (12) empfangenen Radarsignal ($S(t)$) des ersten Signals ($S_1(t)$), wobei die Vorrichtung (18) einen Prozessor (24) aufweist, welcher imstande ist, die folgenden Schritte durchzuführen:

- Verarbeiten des empfangenen Signals ($S(t)$), um ein verarbeitetes empfangenes Signal ($S_T(t)$) zu erlangen,
- Ermitteln der Amplitude-Koeffizienten ($A_i$) und der Verzögerungen ($\tau_i$) der Elementarsignale des ersten Signals ($S_1(t)$) bezüglich des mittels des Bordradars (10) gesendeten Signals ($E_1(t)$), wobei der Schritt des Ermittelns ausgehend von der bereitgestellten Nachbildung ($h(t)$), vom verarbeiteten empfangenen Signal ($S_T(t)$) durchgeführt wird, wobei der Schritt des Ermittelns aufweist das Berechnen eines Filters, welches an das Signal des Bordradars (10) angepasst ist, ausgehend von der bereitgestellten Nachbildung ($h(t)$), vom verarbeiteten empfangenen Signal ($S_T(t)$), wobei das angepasste Filter eine Funktion ist, deren Extrema die Amplitude-Koeffizienten ($A_i$) der Elementarsignale des ersten empfangenen Signals ($S_1(t)$) sind, und
- Eliminieren, im verarbeiteten empfangenen Signal ($S_T(t)$), des ersten Signals ($S_1(t)$), um das zweite Signal ($S_2(t)$) zu erlangen, wobei der Schritt des Eliminierens ausgehend von der bereitgestellten Nachbildung ($h(t)$), von den ermittelten Amplitude-Koeffizienten ($A_i$) und von den ermittelten Verzögerungen ($\tau_i$) durchgeführt wird.

**Claims**

**1.** A method for eliminating in a radar signal ($S(t)$) received by a radar detector (12) belonging to a platform (14), a first signal ($S_1(t)$) coming from at least one on-board radar (10) belonging to the same platform (14), the method comprising the following steps:

- providing a replica ($h(t)$) of the signal ($E_1(t)$) emitted by the on-board radar (10),
- receiving by the radar detector (12) a signal ($S(t)$), the received signal ($S(t)$) being the sum of a first signal ($S_1(t)$) depending on the signal ($E_1(t)$) emitted by the on-board radar (10) and a second signal ($S_2(t)$) independent of the signal ($E_1(t)$) emitted by the on-board radar (10), the first signal ($S_1(t)$) being able to be represented by a linear combination of elementary signals each having an amplitude coefficient ($A_i$) and a delay ($\tau_i$) relative to the signal ($E_1(t)$) emitted by the on-board radar (10),
- processing the received signal ($S(t)$) to obtain a processed received signal ($S_T(t)$),
- determining the amplitude coefficients ($A_i$) and the delays ($\tau_i$) of the elementary signals of the first signal ($S_1(t)$) relative to the signal ($E_1(t)$) emitted by the on-board radar (10), the determining step being carried out from the provided replica ($h(t)$) and the processed received signal ($S_T(t)$), the determination step comprising calculating a filter adapted to the signal of the on-board radar (10) from the provided replica ($h(t)$), the processed received signal ($S_T(t)$), the adapted filter being a function whose extrema are the amplitude coefficients ($A_i$) of the elementary signals of the first received signal ($S_1(t)$), and
- eliminating, in the processed received signal ($S_T(t)$), the first signal ($S_1(t)$) to obtain the second signal ($S_2(t)$), the eliminating step being carried out from the provided replica ($h(t)$), the determined amplitude coefficients ($A_i$) and the determined delays ($\tau_i$).

**2.** The method according to claim 1, wherein the delays ($\tau_i$) of the elementary signals of the first signal ($S_1(t)$) are the times of the corresponding amplitude coefficients ($A_i$).

3. The method according to claim 1 or 2, wherein the filter adapted to the on-board radar (10) is given by the following function:

$$c(\Delta t) = \frac{\int_0^T S_T(t) . [h(t - \Delta t)]^* dt}{\sqrt{\int_0^T |h(t - \Delta t)|^2 dt}}$$

Where:

- $c(\Delta t)$ is a function of the variable $\Delta t$,
- h (t) is the replica provided for the emitted signal $E_1(t)$, expressed in complex representation,
- h (t)* is the conjugated signal of the signal h(t),
- $S_T(t)$ is the processed received signal expressed in complex representation,
- T is the sum of the duration of a representative pulse emitted by the on-board radar (10) and the maximum reception delay on the radar detector (12) of a pulse coming from the on-board radar (10),
- $\int_0^T X . dt$ designates the integral of X on the variable t, t varying from 0 to T,
- $|X|^2$ is the square of the modulus of X, and
- $\sqrt{X}$ is the square root of X.

4. The method according to any one of claims 1 to 3, wherein the determining step comprises comparing each determined amplitude coefficient ($A_i$) to a predetermined threshold, the selected amplitude coefficients ($A_i$) being greater than or equal to the predetermined threshold.

5. The method according to any one of claims 1 to 4, wherein the replica (h(t)) for the provided emitted signal ($E_1(t)$) is a signal sampled at a sampling frequency, the processing step comprising sampling the received signal (S(t)) at the sampling frequency of the replica (h(t)) to obtain the processed received signal ($S_T(t)$).

6. The method according to any one of claims 1 to 5, wherein the eliminating step comprises a phase for calculating a cancellation signal ($S_A(t)$) from the determined amplitude coefficients ($A_i$), the determined delays ($\tau_i$) and the provided emitted signal ($E_1(t)$), the cancellation signal ($S_A(t)$) being an estimate of the first signal ($S_1(t)$).

7. The method according to claim 6, wherein the eliminating step further comprises a phase for subtracting the cancellation signal ($S_A(t)$), from the processed received signal ($S_T(t)$) delayed by an additional delay, the additional delay corresponding at least to the duration for carrying out the determining step and the calculating phase of the elimination step.

8. The method according to any one of claims 1 to 7, wherein the providing, determining and eliminating steps of the elimination method are carried out for each on-board radar (10).

9. A radar detector (12) belonging to a platform (14), the radar detector (12) being able to carry out a step for receiving a signal (S(t)), the received signal (S(t)) being the sum of a first signal ($S_1(t)$) that depends on a signal emitted ($E_1(t)$) by at least one on-board radar (10) belonging to the same platform (14), and a second signal ($S_2(t)$) independent from the signal emitted ($E_1(t)$) by the on-board radar (10), the first signal ($S_1(t)$) being able to be represented by a linear combination of elementary signals each having an amplitude coefficient ($A_1$) and a delay ($\tau_i$) relative to the signal emitted ($E_1(t)$) by the on-board radar (10), the radar detector (12) further comprising an elimination device (18) in the radar signal (S(t)) received by the radar detector (12), of the first signal ($S_1(t)$), the device (18) comprising a processor (24) able to carry out the following steps:

- processing the received signal (S(t)) to obtain a processed received signal ($S_T(t)$),
- determining the amplitude coefficients ($A_i$) and the delays ($\tau_i$) of the elementary signals of the first signal ($S_1(t)$) relative to the signal ($E_1(t)$) emitted by the on-board radar (10), the determining step being carried out from the provided replica (h(t)) and the processed received signal ($S_T(t)$), the determination step comprising calculating a filter adapted to the signal of the on-board radar (10) from the provided replica (h(t)), the processed received signal ($S_T(t)$), the adapted filter being a function whose extrema are the amplitude coefficients ($A_i$) of the ele-

mentary signals of the first received signal ($S_1(t)$), and

- eliminating, in the processed received signal ($S_T(t)$), the first signal ($S_1(t)$) to obtain the second signal ($S_2(t)$), the eliminating step being carried out from the provided replica (h(t)), the determined amplitude coefficients ($A_i$) and the determined delays ($\tau_i$).

FIG.1

FIG.2

FIG.3

FIG.4

## RÉFÉRENCES CITÉES DANS LA DESCRIPTION

**Documents brevets cités dans la description**

- US 20100302091 A